# EUROPÄISCHE PATENTSCHRIFT

(11) **EP 1 185 797 B1**
(45) Veröffentlichungstag und Bekanntmachung des Hinweises auf die Patenterteilung: **21.05.2003**
(21) Anmeldenummer: 00940335.3
(22) Anmeldetag: 07.06.2000
(51) Int. Cl.: F15B 1/22, F16L 55/04

(54) **HYDROSPEICHER, INSBESONDERE HYDRODÄMPFER**
HYDRAULIC ACCUMULATOR, ESPECIALLY A HYDRAULIC DAMPER
ACCUMULATEUR HYDRAULIQUE, NOTAMMENT AMORTISSEUR HYDRAULIQUE

(30) Priorität: 17.06.1999 DE 19927594
(43) Veröffentlichungstag der Anmeldung: 13.03.2002
(73) Patentinhaber: HYDAC Technology GmbH, 66280 Sulzbach/Saar (DE)
(72) Erfinder: WEBER, Norbert, D-66280 Sulzbach (DE)
(74) Vertreter: Bartels, Martin Erich Arthur
(86) Internationale Anmeldenummer: EP0005223
(87) Internationale Veröffentlichungsnummer: WO00079135

(56) Entgegenhaltungen:
- DE-A- 3 235 234
- US-A- 4 877 055

## Beschreibung

Die Erfindung betrifft einen Hydrospeicher, insbesondere Hydrodämpfer, mit den Merkmalen des Oberbegriffes des Patentanspruches 1.

In Hydrauliksystemen können Druckschwankungen auftreten, wobei es sich um periodische oder auch einmalige Vorgänge handeln kann. Häufige Fälle sind Förderstromschwankungen von Verdrängerpumpen, Betätigen von Absperr- und Regelarmaturen mit kurzen Öffnungs- und Schließzeiten, Anund Abschalten von Pumpen sowie schlagartiges Verbinden von Fluidräumen mit unterschiedlichem Druckniveau.
Zur Dämpfung dahingehender Druckschwankungen dienen sog. Hydrodämpfer, die den Hydrospeichern (DE 25 08 960 A1, DE 36 09 534 C1) zugerechnet werden, wobei sich insbesondere Membran- und Blasenspeicher eignen. Ferner werden die Hydrodämpfer nach Bauarten unterschieden in Pulsationsdämpfer, Saugstromstabilisatoren, Druckstoßdämpfer und sog. Flüssigkeitsschalldämpfer oder Silencer. Nähere Einzelheiten über diese verschiedenen Bauarten sind beispielsweise Gegenstand der Prospektveröffentlichung "Hydrodämpfer" mit der Nr. 3.701.7/7.95 Hydac-Katalog 01, Rubrik 4.
Bei den bekannten Dämpfungslösungen mit Hydrospeichern oder Hydrodämpfern, wie sie beispielhaft auf Seite 14 des genannten Prospektes offenbart sind, wird ein Blasen- oder Membranspeicher über ein Adapter- oder Verbindungsstück mit zwei Fluidanschlüssen in Form von Rohrleitungen verbunden, die im wesentlichen in einer Ebene verlaufend angeordnet sind, wobei im rechten Winkel hierzu das Verbindungsstück in den Bereich der Rohrleitungen mündet, die Teil eines Anschlußstückes sind. Auf diese Art und Weise wird die Fluidseite des Speichers und mithin das Innere des Speichers mit den Fluidanschlüssen verbunden. Kommt es zu den angesprochenen Druckschwankungen, dämpft die Gasseite des Speichers die dahingehenden Druckstöße ab. Als Arbeitsgas findet hier insbesondere Stickstoff Verwendung.

Durch die DE-A-3 235 234 ist ein Niedrigpreis-Hydrospeicher bekannt, dessen Druckgefäß einen kugeligen Körper besitzt. In das Druckgefäß greift ein Blasenabstützteil ein, an dem sich die Membranblase vollständig abstützen kann, sofern das Innere des Blasenabstützteiles fluidleer ist. Zum Anschluß des Hydrospeichers an eine Fluidversorgung weist das Blasenabstützteil auf seiner Unterseite ein Verbindungsstück auf mit einem rotationssymmetrischen Verbindungszapfen, der mit einem Außengewinde für einen Einschraubvorgang in ein korrespondierendes Anschlußstück versehen ist, das die Fluidversorgung für den Hydrospeicher aufweist. Der bekannte Hydrospeicher weist mithin nur einen Fluidanschluß auf, der sich in Längsrichtung des Blasenabstützteiles erstreckt und mithin einen verhältnismäßig großen Einbauraum benötigt. Da der bekannte Hydrospeicher über nur einen Fluidanschluß an seinem Verbindungsstück verfügt, kommt es zu ungünstigen Druckverhältnissen im System, was insbesondere für den Fall gilt, sofern ein dahingehender Speicher als Dämpfer, Stabilisator od. dgl. eingesetzt werden soll.

Durch die US-A-4 877 055 ist ein Drosselventil bekannt, das derart in einen hydraulischen Schaltkreis mit einem Hydrospeicher geschaltet ist, daß bei nicht benötigtem Einsatz des Hydrospeichers sein auf der Fluidseite bevorratetes Fluid fortlaufend über das eine Leckagestelle bildende Drosselventil an die Tankseite abgegeben wird, um dergestalt eine vollständige Entspannung der elastischen Membran im Hydrospeicher zu erreichen, mit der Folge, daß im derart erreichten entspannten Membranzustand Schädigungen an der Membran auch langfristig vermieden sind.

Das zum Einsatz kommende Leckage - Drosselventil ist in Patronen - Bauweise ausgeführt und greift über sein rotationssymmetrisches Verbindungsstück mit Außengewinde in ein Anschlußstück mit zwei Fluidanschlüssen für den hydraulischen Kreis ein. In das Verbindungsstück ist ein Drosselteil eingebracht, das mit seiner Außenwand einen Ringkanal begrenzt, der ansonsten von der Innenwand des Verbindungsstückes umfaßt ist. Ein Verbindungsabschnitt des einen Fluidanschlusses, der an den Hydrospeicher anschließbar ist, mündet dabei in Einschraubrichtung des Verbindungsstückes in den genannten Ringkanal, der wiederum über einen Fluidanschluß zur Tankseite hin in das Anschlußstück mündet. Auch die dahingehende Drossel - Ventilanordnung baut in Längsrichtung groß auf, insbesondere weil man zum Erreichen einer wirksamen Drosselstelle für das Fluid einen groß bemessenen Spaltbereich vorsieht zwischen Verbindungsstück und Drosselteil, der sich in Richtung des Ringkanals hin entspannt. Auch die dahingehende bekannte Anordnung mit ihren entsprechend langen Fluidleitungsstrecken erlaubt keine günstigen Druckverhältnisse im Bereich des Gesamtsystems mit Hydrospeicher und baut im Bereich von Anschluß- und Verbindungsstück konstruktiv groß auf.

Ausgehend von diesem Stand der Technik liegt der Erfindung die Aufgabe zugrunde, einen Hydrospeicher, insbesondere Hydrodämpfer, zu schaffen, der eine kompakte Bauweise der beschriebenen Anordnung mit kurzen Leitungslängen und dadurch eine Verbesserung der Druckverhältnisse im System ermöglicht und die Austauschbarkeit durch Verringerung des Reparaturaufwandes verbessert. Eine dahingehende Aufgabe löst ein Hydrospeicher mit den Merkmalen des Patentanspruches 1 in seiner Gesamtheit.

Dadurch, daß gemäß dem kennzeichnenden Teil des Patentanspruches 1
- das Verbindungstück außenumfangsseitig mindestens einen nutartigen Ringkanal aufweist,
- bei Erreichen der Einbausituation der ins Innere des Hydrospeichers mündende Verbindungsabschnitt des Verbindungsstückes über den Ringkanal mit dem zuordenbaren Fluidanschluß im Anschlußstück fluidführend verbunden ist,
- der Verbindungsabschnitt im rechten Winkel zu der Einschraubrichtung des Verbindungsstückes in den Ringkanal mündet und
- ein weiterer Verbindungsabschnitt in der Einschraubrichtung die Verbindung mit dem anderen Fluidanschluß im Anschlußstück herstellt,
ist der Hydrospeicher oder Hydrodämpfer mit seinem Verbindungsstück unmittelbar in das Anschlußstück einsetzbar und insbesondere derart mit dem Anschlußstück verbindbar, daß eine kompakte Bauweise erreicht ist.

Aufgrund der kompakten Anordnung, wobei der Verbindungsabschnitt im rechten Winkel in den Ringkanal mündet, sind auch die Leitungslängen in Form der Verbindungsabschnitte innerhalb des Anschlußstückes verkürzt, so daß schädliche Druckdifferenzen reduziert sind und die Druckschwankungen können besser gedämpft werden. Des weiteren ist beispielsweise ein Einbau unmittelbar an der Störquelle möglich, beispielsweise direkt an der Pumpe, die die Druckschwankungen erzeugt. Aufgrund des integralen. Einbaus des Verbindungsstückes des Speichers im Anschlußstück ist eine größere Sicherheit bei der Montage erreichbar, da weniger Bauteile zum Einsatz kommen. Auch läßt sich ein dahingehender Hydrospeicher dann einfach aus dem Anschlußstück entfernen, so daß ein einfacher, kostengünstiger Austausch der Hydrospeicher erreicht ist.

Eine besondere Schwierigkeit für den angesprochenen Blockeinbau liegt in der äußeren Gestaltung und der gleichzeitig notwendigen Zwangsführung über das Verbindungsstück des Hydrodämpfers. Dem wird vorzugsweise dadurch begegnet, daß das Verbindungsstück des Hydrodämpfers als rotationssymmetrischer Verbindungszapfen mit einem Außengewinde ausgebildet ist.

Ein besonders kompakter Aufbau der angesprochenen Anordnung ist erreicht, wenn vorzugsweise der weitere Verbindungsabschnitt in einen weiteren Ringkanal mündet, der außenumfangsseitig am Verbindungsstück des Hydrospeichers verläuft und der in der Einschraubrichtung in einer anderen Ebene als der erste Ringkanal angeordnet ist und wobei des weiteren vorgesehen ist, daß der weitere Fluidanschluß quer zur Einschraubrichtung in den weiteren Ringkanal fluidführend mündet.

Bei einer weiteren besonders bevorzugten Ausführungsform des erfindungsgemäßen Hydrospeichers münden die Verbindungsabschnitte als Fluidleitungen ausgebildet in mindestens einen vergrößerten Hohlraum des Verbindungsstückes, was wiederum das schädliche Δp in den Zu- und Abführleitungen verringert. Vorzugsweise ist dabei vorgesehen, daß das Anschlußstück als Anschlußblock mit normierbaren Fluidanschlüssen ausgebildet ist. Hierdurch ist in kostengünstiger Weise ein modulares Aufbausystem von Anschlußblöcken und Hydrodämpfem erreicht.

Bei einer besonders bevorzugten Ausführungsform des erfindungsgemäßen Hydrospeichers sitzt sein sonstiges Gehäuse auf dem Anschlußstück auf oder hält zu diesem einen axialen Abstand in der Einschraubrichtung ein, so daß zwischen dem Gehäuse und dem Anschlußstück bzw. zwischen dem Verbindungsstück und dem Anschlußstück nur ein Dichtmittel angeordnet ist. Da dem Grunde nach nur eine nach außen wirkende Dichtung notwendig ist, erleichtert und verkürzt dies wiederum den Montageaufwand für die angesprochene Anordnung.

Bei einer weiteren bevorzugten Ausführungsform des erfindungsgemäßen Hydrospeichers ist das Verbindungsstück längs seines Außengewindes mit einem weiteren Dichtmittel versehen, oder das Verbindungsstück ist an seinem freien Ende mit einem Anlagekonus versehen, wobei als Dichtmittel ausschließlich außenumfangsseitig am Außengewinde ein Kunststoff-Dichtring vorgesehen ist. Die dahingehenden Anordnungen mit reduziertem Dichtmitteleinsatz sind insbesondere für die Fälle vorgesehen, wo sehr hohe Fluidgeschwindigkeiten (Pulsationen) erreicht werden und das Einschraubgewinde selbst aufgrund seiner großen Gewindelänge als dicht für den speziellen Verwendungszweck angesehen werden kann.

Ein besonders kostengünstiger und kompakter Aufbau läßt sich erreichen, sofern der Hydrospeicher ein Metallbalgspeicher ist, dessen freies Ende dem Verbindungsstück zugewandt ist und der außenumfangsseitig eine Fluidkammer mit dem Gehäuse begrenzt. Vorzugsweise ist dabei das Gehäuse ebenso wie der Metallbalg selbst rotationssymmetrisch ausgebildet.

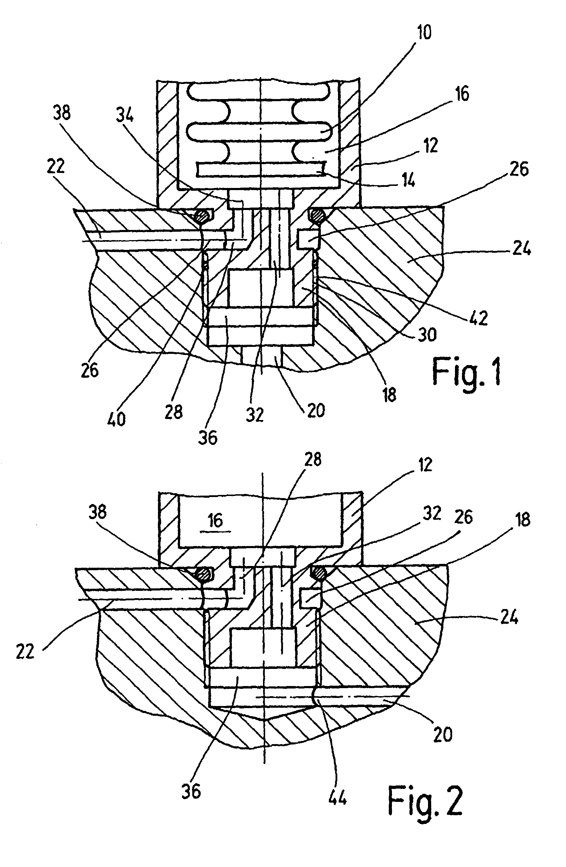

Im folgenden wird der erfindungsgemäße Hydrospeicher, insbesondere Hydrodämpfer, anhand einer Ausführungsform nach der Zeichnung näher erläutert.
Es zeigen in prinzipieller und nicht maßstäblicher Darstellung die
- Fig. 1 bis 4: eine teilweise Schnittdarstellung des als Metallbalgspeicher ausgebildeten Hydrodämpfers, der mit seinem Verbindungsstück im Anschlußblock gehalten ist.

Der in der Fig.1 teilweise dargestellte Hydrospeicher, der insbesondere einen Hydrodämpfer ausbildet, ist mit einem Metallbalg 10 versehen, der die Druckschwankungen in einem hydraulischen Kreis dämpfen soll. Der Metallbalg 10 kann in seinem Inneren ein Arbeitsgas, wie Stickstoff, aufweisen, mit einer Druckfeder versehen sein oder gegenüber der Umgebung luftdicht abgeschlossen werden. Letztendlich hängt dies vom gewünschten vorgebbaren Dämpfungsverhalten ab. Der Metallbalg 10 sowie das zugeordnete Gehäuse 12 sind nur teilweise dargestellt. An seinem freien, in Blickrichtung auf die Fig.1 gesehen nach unten weisenden Ende weist der Metallbalg 10 eine Abschlußplatte 14 auf. Der einfacheren Darstellung wegen wurde in den Fig.2ff auf die Darstellung des Metallbalges 10 verzichtet und nur noch das Metallbalgspeichergehäuse 12 teilweise dargestellt, sofern dies für das Verständnis der Erfindung notwendig ist. Zwischen dem Außenumfang des Metallbalges 10 mit seinen einzelnen Balgelementen und der Innenseite des zugeordneten Gehäuses 12 befindet sich die sog. Fluidseite 16 des Hydrospeichers.

Anstelle des teilweise gezeigten Metallbalges 10 kann als Hydrospeicher oder Hydrodämpfer insbesondere auch ein üblicher Membranspeicher oder Blasenspeicher mit gummielastischer Membranblase oder Kolbenspeicher eingesetzt werden. Des weiteren braucht die erfindungsgemäße Änschlußtechnik nicht auf den Anschluß von Hydrodämpfern beschränkt zu sein, sondern kann vielmehr insgesamt dem Anschluß von Hydrospeichern dienen. Der als Hydrodämpfer dienende Metallbalg 10 ist mit einem Verbindungsstück 18 zum Herstellen einer fluidführenden Verbindung zwischen dem Inneren des Hydrospeichers, also seiner Fluidseite 16, und mindestens zwei Fluidanschlüssen 20,22 versehen, die Teil eines Anschlußstückes 24 sind, wobei in der dargestellten Einbausituation nach den Figuren das Verbindungsstück 18 vollständig mit dem Anschlußstück 24 verbunden ist.

Das Verbindungsstück 18 ist außenumfangsseitig durchgehend mit einem nutartigen Ringkanal 26 versehen, so daß bei erreichter Einbausituation nach den Figuren der ins Innere 16 des Hydrospeichers mündende Verbindungsabschnitt 28 des Verbindungsstückes 18 über den angesprochenen Ringkanal 26 mit dem zugeordneten Fluidanschluß 22 im Anschlußstück 24 fluidführend verbunden ist. Das Verbindungsstück 18 ist als rotationssymmetrischer zylindrischer Verbindungszapfen mit einem Außengewinde 30 ausgebildet, wobei der Verbindungsabschnitt 28 im rechten Winkel zu der in Blickrichtung auf die Figuren gesehen vertikalen Einschraubrichtung des Verbindungsstückes 18 in den Ringkanal 26 mündet, sobald die vollständige Einschraub- oder Einbausituation erreicht ist. Ein weiterer Verbindungsabschnitt 32, der achsparallel zu der angesprochenen Einschraubrichtung verläuft, stellt die Verbindung mit dem anderen Fluidanschluß 20 im Anschlußstück 24 her. Aufgrund des am Verbindungsstück 18 umlaufend angeordneten Ringkanals 26 kann in jeder beliebigen Drehstellung des Hydrospeichers eine fluidführende Verbindung mit dem Anschlußstück 24 hergestellt werden.

Die Verbindungsabschnitte 28 und 32 sind als Fluidleitungen ausgebildet und münden beide in Richtung der Fluidseite in einen gemeinsamen Hohlraum 34 innerhalb des Verbindungsstückes 18 im Bereich des Überganges zum sonstigen Gehäuse 12 des Hydrodämpfers. Darüber hinaus mündet am gegenüberliegenden Ende der weitere Verbindungsabschnitt 32 in einen weiteren stufenweise vergrößerten Hohlraum 36, in den wiederum der Fluidanschluß 20 in koaxialer Richtung zur Einschraubrichtung des Hydrodämpfers 10 mündet.

Das Anschlußstück 24 ist als modularer Anschlußbock (nicht vollständig dargestellt) mit normierbaren Anschlußstellen (nicht dargestellt) ausgebildet. Das sonstige Gehäuse 12 sitzt bei den Ausführungsformen nach den Fig. 1 und 2 auf der planen Außenseite des Anschlußstückes 24 auf, wobei zwischen dem Gehäuse 12 an der Ansatzstelle des Verbindungsstückes 18 zwischen diesem und dem Anschlußstück 24 ein Dichtmittel 38 in Form eines Dichtringes angeordnet ist. Zusätzlich oder alternativ in Abhängigkeit von den verlangten Dichtsituationen kann ein weiteres Dichtmittel 40 in Form eines Kunststoff-Dichtringes am Außengewinde 30 des Verbindungsstückes 18 vorgesehen sein, das die Abdichtung zwischen den Gewindegängen von Außengewinde 30 des Verbindungsstückes 18 und zugeordnetem Innengewinde 42 im Anschlußstück 24 mit unterstützt oder übernimmt. Eine besonders gute Dämpfung der Druckschwankungen läßt sich erreichen, sofern diese über den Fluidanschluß 20 auf die Fluidseite 16 des Hydrodämpfers gelangen und über die Fluidleitung 22 aus dem Abschlußstück 24 die Fluidmenge herausgeführt wird. Die Fluidführung kann kontinuierlich oder unterbrochen erfolgen.

Die nachfolgenden Ausführungsformen nach den Fig.2ff werden nur noch insofern erläutert, als sie sich wesentlich von der Ausführungsform nach der Fig.1 unterscheiden. Dabei werden für dieselben Bauteile im wesentlichen dieselben Bezugszeichen verwendet.

Bei der Ausführungsform nach der Fig.2 mündet der weitere Verbindungsabschnitt 32 in einen weiteren Hohlraum 36 oder weiteren Ringkanal 44, der außenumfangsseitig am Verbindungsstück 18 durchgehend verläuft und der in der Einschraubrichtung des Speichers gesehen in Blickrichtung auf die Fig.2 in einer Ebene unterhalb des ersten Ringkanals 26 angeordnet ist. Hierbei ist der weitere Fluidanschluß 20 ebenso wie der Fluidanschluß 22 in einer Ebene quer zur Einschraubrichtung angeordnet, wobei beide Fluidanschlüsse 20, 22 wiederum fluidführend in die zugeordneten Ringkanäle 26 bzw. 44 münden.

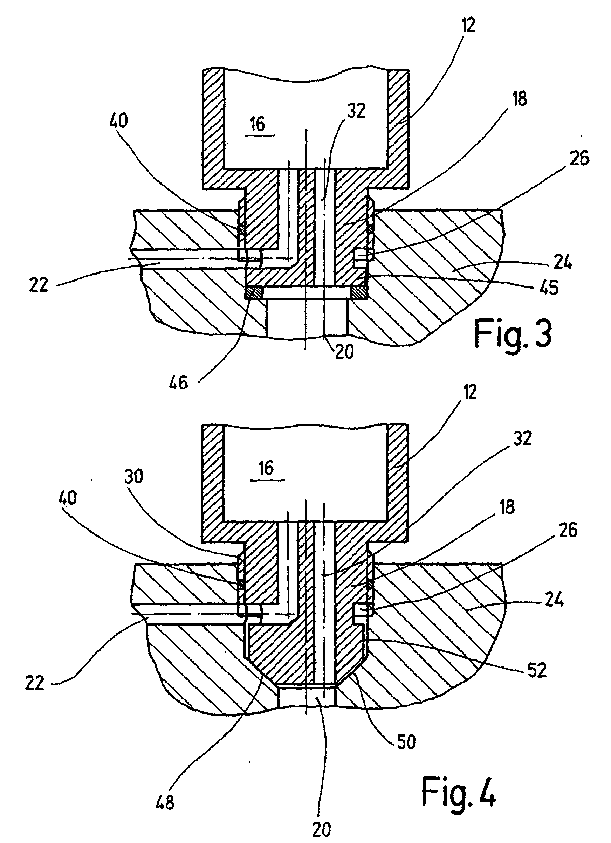

Bei den Ausführungsformen nach den Fig.3 und 4 weist das Gehäuse 12 des Hydrospeichers oder Hydrodämpfers einen axialen Abstand auf zu der planen Oberseite des blockartigen Anschlußstückes 24. Bei der Ausführungsform nach der Fig.3 erfolgt die Abdichtung über ein Dichtmittel 46 in Form eines Dichtringes zwischen einer absatzartigen Verschmälerung des Anschlußstückes 24 und einem Flanschteil 45 des ansonsten im wesentlichen zylindrisch ausgebildeten Verbindungsstückes 18. Vergleichbar der Ausführungsform nach der Fig.1 mündet der weitere Verbindungsabschnitt 32 in Form einer Fluidleitung in den verbreiterten Anschluß 20.

Bei der Ausführungsform nach der Fig.4 ist nur noch am Außengewinde 30 zwischen dem Verbindungsstück 18 und dem Anschlußstück 24 ein Dichtmittel 40 vorgesehen, ansonsten findet eine Abdichtung über den Konusteil 48 am freien Ende des Verbindungsstückes 18 statt, das sich gegenüber einem Anlagekonus 50 des Anschlußstückes 24 abstützt, wobei in Blickrichtung auf die Fig.4 gesehen im darüberliegenden oberen Bereich ein Freistich 52 vorgesehen ist mit darüber angeordnetem Ringkanal 26. Hierdurch ist es möglich, über das Außengewinde 30 die Konusbereiche 48,50 derart gegeneinander zu verspannen, daß über diese wirksam eine Abdichtung erfolgt und eine sichere Fluidführung zwischen dem Fluidanschluß 20 und dem weiteren Verbindungsabschnitt 32 hergestellt ist. Auf vergleichbare Abdichtmittel im unteren Bereich wurde bei der Ausführungsform nach der Fig.2 verzichtet und die Abdichtung erfolgt dort ausschließlich über den Außengewindebereich 30 zwischen Verbindungsstück 18 und Abschlußstück 24. Hierdurch ist eine Gewindedichtung erreicht mit einer sehr klein bauenden Abdichtung zwischen den angesprochenen Fluidanschlüssen 20,22.

Mit dem erfindungsgemäßen Blockanschluß für Pulsationsdämpfer sind kurze Leitungslängen erreicht und ein beliebiger Einbau in Hydrauliksysteme möglich. Die Bauweise ist kompakt und aufgrund der geringen Teilevielzahl ist eine größere Sicherheit bei der Montage erreicht. Ferner ist eine einfache Handhabung gewährleistet und die Pulsationsdämpfer lassen sich rasch gegen neue austauschen.

## Patentansprüche

1. Hydrospeicher, insbesondere Hydrodämpfer (10), mit einem Verbindungsstück (18) zum Herstellen einer fluidführenden Verbindung zwischen dem Inneren (16) des Hydrospeichers und mindestens zwei Fluidanschlüssen (20,22), die Teil eines Anschlußstückes (24) sind, in einer Einbausituation, bei der das Verbindungsstück (18) mit dem Anschlußstück (24) verbunden ist, **dadurch gekennzeichnet, daß**
- das Verbindungsstück (18) außenumfangsseitig mindestens einen nutartigen Ringkanal (26) aufweist,
- bei Erreichen der Einbausituation der ins Innere (16) des Hydrospeichers mündende Verbindungsabschnitt (28) des Verbindungsstückes (18) über den Ringkanal mit dem zuordenbaren Fluidanschluß (22) im Anschlußstück (24) fluidführend verbunden ist,
- der Verbindungsabschnitt (28) im rechten Winkel zu der Einschraubrichtung des Verbindungsstückes (18) in den Ringkanal (26) mündet und
- ein weiterer Verbindungsabschnitt (32) in der Einschraubrichtung die Verbindung mit dem anderen Fluidanschluß (20) im Anschlußstück (24) herstellt.

2. Hydrospeicher nach Anspruch 1, **dadurch gekennzeichnet, daß** das Verbindungsstück (18) als rotationssymmetrischer Verbindungszapfen mit einem Außengewinde (30) ausgebildet ist.

3. Hydrospeicher nach Anspruch 2, **dadurch gekennzeichnet, daß** der weitere Verbindungsabschnitt (32) in einen weiteren Hohlraum (36) oder in einen weiteren Ringkanal (44) mündet, der außenumfangsseitig am Verbindungsstück (18) verläuft und der in der Einschraubrichtung in einer anderen Ebene als der erste Ringkanal (26) angeordnet ist und daß der weitere Fluidanschluß (20) quer zur Einschraubrichtung in den weiteren Ringkanal (44) fluidführend mündet.

4. Hydrospeicher nach Anspruch 2 oder 3, **dadurch gekennzeichnet; daß** die Verbindungsabschnitte (28,32) als Fluidleitungen ausgebildet in mindestens einen vergrößerten Hohlraum (34) innerhalb des Verbindungsstückes (18) münden.

5. Hydrospeicher nach einem der Ansprüche 1 bis 4, **dadurch gekennzeichnet, daß** das Anschlußstück (24) als Anschlußblock mit normierbaren Fluidanschlüssen ausgebildet ist.

6. Hydrospeicher nach einem der Ansprüche 2 bis 5, **dadurch gekennzeichnet, daß** sein sonstiges Gehäuse (12) auf dem Anschlußstück (24) aufsitzt oder zu diesem einen axialen Abstand in der Einschraubrichtung einhält und daß zwischen dem Gehäuse (12) und dem Anschlußstück (24) bzw. zwischen dem Verbindungsstück (18) und dem Anschlußstück (24) ein Dichtmittel (38) angeordnet ist.

7. Hydrospeicher nach Anspruch 6, **dadurch gekennzeichnet, daß** das Verbindungsstück (18) längs seines Außengewindes (30) mit einem weiteren Dichtmittel (40) versehen ist.

8. Hydrospeicher nach Anspruch 7, **dadurch gekennzeichnet, daß** das Verbindungsstück an seinem freien Ende mit einem Konusteil (48) versehen ist und daß als Dichtmittel (40) ausschließlich außenumfangsseitig am Außengewinde (30) ein Kunststoff-Dichtring vorgesehen ist.

9. Hydrospeicher nach einem der Ansprüche 1 bis 8, **dadurch gekennzeichnet, daß** er einen Metallbalg (10) aufweist, dessen freies Ende (14) dem Verbindungsstück (18) zugewandt ist und der außenumfangsseitig eine Fluidkammer (16) mit dem Gehäuse (12) begrenzt.

10. Hydrospeicher nach Anspruch 9, **dadurch gekennzeichnet, daß** er sein Gehäuse (12) ebenso wie der Metallbalg (10) rotationssymmetrisch ausgebildet ist.

## Claims

1. Hydraulic accumulator, especially a hydraulic damper (10), comprising a connecting piece (18) for producing a fluidic connection between the interior (16) of the said hydraulic accumulator and at least two fluid connections (20, 22) which are part of a fitting (24) when assembled, whereby the connecting piece (18) is connected to the fitting (24), **characterised in that**
- the connecting piece (18) is provided with at least one annular channel (26) on the outer periphery;
- once assembled, the connecting section (28) of the connecting piece (18) terminating in the interior (16) of the hydraulic accumulator is hydraulically connected via the annular channel with the fluid connection (22) in the fitting (24);
- the connecting section (28) terminates in the annular channel (26) at right angles to the direction in which the connecting piece (18) is screwed in;
- a further connecting piece (32) makes connection with the other fluid connection (20) in the fitting (24) in the screwing-in direction.

2. Hydraulic accumulator according to claim 1, **characterised in that** the connecting piece (18) is designed as a rotationally symmetrical connecting spigot with outside thread (30).

3. Hydraulic accumulator according to claim 2, **characterised in that** the further connecting section (32) terminates in a further cavity (36) or in a further annular channel (44) which extends on the outside periphery of the connecting piece (18) and is arranged in the screwing-in direction in a different plane than the first annular channel (26), and that the further fluid connection (20) terminates hydraulically in the further annular channel (44) across the screwing-in direction.

4. Hydraulic accumulator according to claim 2 or 3, **characterised in that** the connecting sections (28, 32), designed as fluid lines, terminate in at least one enlarged cavity (34) within the connecting piece (18).

5. Hydraulic accumulator according to one of the claims 1 to 4, **characterised in that** the fitting (24) is designed as a connecting block with standardizable fluid connections.

6. Hydraulic accumulator according to one of the claims 2 to 5, **characterised in that** its other housing (12) sits on the fitting (24) or maintains an axial distance from it in the screwing-in direction, and that a sealing means is arranged between the housing (12) and the fitting (24) or between the connecting piece (18) and the fitting (24).

7. Hydraulic accumulator according to claim 6, **characterised in that** the connecting piece (18) is provided with a further sealing means (40) along its outside thread (30).

8. Hydraulic accumulator according to claim 7, **characterised in that** the connecting piece is provided at its free end with a tapered section (48) and that a plastic ring seal is only provided on the outer periphery at the outside thread (30).

9. Hydraulic accumulator according to one of the claims 1 to 8, **characterised in that** it has a metal bellows (10), the free end (14) of which faces the connecting piece (18) and delimits a hydraulic chamber (16) with the housing (12).

10. Hydraulic accumulator according to claim 9, **characterised in that** its housing (12) as well as the metal bellows (10 are rotationally symmetrical.

## Revendications

1. Accumulateur hydraulique, en particulier amortisseur hydraulique (10), avec un coupleur (18) pour établir une liaison hydraulique entre l'intérieur (16) de l'accumulateur hydraulique et au moins deux raccords hydrauliques (20, 22), qui font partie intégrante d'un bloc-raccord hydraulique (24), dans une situation de montage au cours de laquelle le coupleur (18) est relié au bloc-raccord hydraulique (24), **caractérisé en ce que**
- le coupleur (18) présente sur le périmètre extérieur au moins un canal annulaire (26) de type rainure,
- en parvenant à la situation de montage, la section de raccordement (28) du coupleur (18) débouchant à l'intérieur (16) de l'accumulateur hydraulique est reliée par le canal annulaire au raccordement hydraulique (22) affectable dans le bloc-raccord hydraulique (24),
- la section de raccordement (28) dans l'angle droit par rapport au sens du filetage du coupleur (18) débouche dans le canal annulaire (26) et
- une autre section de raccordement (32) dans le sens du filetage établit la liaison avec l'autre raccord hydraulique (20) dans le bloc-raccord hydraulique (24).

2. Accumulateur hydraulique selon la revendication 1, **caractérisé en ce que** le coupleur (18) est formé en tant que tourillon de raccordement à symétrie de révolution avec un filetage extérieur (30).

3. Accumulateur hydraulique selon la revendication 2, **caractérisé en ce que** l'autre section de raccordement (32) débouche dans un autre espace creux (36) ou dans un autre canal annulaire (44), qui s'étend à la périphérie extérieure sur le coupleur (18) et qui est disposé dans le sens du filetage à un autre niveau que le canal annulaire (26), et **en ce que** l'autre raccord hydraulique (20) débouche transversalement au sens du filetage dans l'autre canal annulaire (44) hydraulique.

4. Accumulateur hydraulique selon la revendication 2 ou 3, **caractérisé en ce que** les éléments sections de raccordement (28, 32) formés en tant que conduites hydrauliques débouchent dans au moins un espace creux (34) agrandi à l'intérieur du coupleur (18).

5. Accumulateur hydraulique selon la revendication 1 à 4, **caractérisé en ce que** le bloc-raccord hydraulique (24) est formé en tant que tête de raccordement avec des raccords hydrauliques pouvant être normalisés.

6. Accumulateur hydraulique selon la revendication 2 à 5, **caractérisé en ce que** son autre carter (12) est placé sur le bloc-raccord hydraulique (24) ou observe une distance axiale dans le sens du filetage par rapport audit bloc-raccord hydraulique, et **en ce qu'**un moyen d'étanchéité (38) est disposé entre le carter (12) et le bloc-raccord hydraulique (24) ou entre le coupleur (18) et le bloc-raccord hydraulique (24).

7. Accumulateur hydraulique selon la revendication 6, **caractérisé en ce que** le coupleur (18) est pourvu le long de son filetage extérieur (30) d'un autre moyen d'étanchéité (40).

8. Accumulateur hydraulique selon la revendication 7, **caractérisé en ce que** le coupleur est pourvu à son extrémité libre d'une partie conique (48), et **en ce qu'**une rondelle d'étanchéité en matière plastique est fournie, en tant que moyen d'étanchéité (40), exclusivement à la périphérie extérieure sur le filetage extérieur (30).

9. Accumulateur hydraulique selon la revendication 1 à 8, **caractérisé en ce qu'**il présente un soufflet métallique (10) dont l'extrémité libre (14) est orientée vers le coupleur (18) et qui délimite à la périphérie extérieure une chambre à fluide hydraulique (16) avec le carter (12).

10. Accumulateur hydraulique selon la revendication 9, **caractérisé en ce qu'**il est formé à symétrie de révolution ainsi que son carter (12) et son soufflet métallique (10).
